# EUROPÄISCHE PATENTSCHRIFT

(11) **EP 4 126 431 B1**
(45) Veröffentlichungstag und Bekanntmachung des Hinweises auf die Patenterteilung: **04.10.2023**
(21) Anmeldenummer: 21718008.2
(22) Anmeldetag: 26.03.2021
(51) Int. Cl.: B23F 23/06, B23B 31/02, B23B 31/16, B23B 31/10

(54) **SPANNEINSATZ FÜR SPANNBACKEN EINES SPANNFUTTERS, SET AN SPANNEINSÄTZEN UND VERFAHREN ZUM SPANNEN EINES VERZAHNTEN BAUTEILS**
CLAMPING INSERT FOR CLAMPING JAWS OF A CLAMPING CHUCK, SET OF CLAMPING INSERTS AND METHOD FOR CLAMPING A TOOTHED COMPONENT
INSERT DE SERRAGE POUR MÂCHOIRES DE SERRAGE D'UN MANDRIN DE SERRAGE, ENSEMBLE D'INSERTS DE SERRAGE ET PROCÉDÉ DE SERRAGE D'UN ÉLÉMENT DENTÉ

(30) Priorität: 01.04.2020 DE 102020109007
(43) Veröffentlichungstag der Anmeldung: 08.02.2023
(73) Patentinhaber: Schaeffler Technologies AG & Co. KG, 91074 Herzogenaurach (DE)
(72) Erfinder: BUEHLER, Matthias, 91086 Aurachtal (DE); FENZ, Achim, 91413 Neustadt Aisch (DE)
(74) Vertreter: Rauscher-Thies, Elke Doris
(86) Internationale Anmeldenummer: PCT/DE2021/100304
(87) Internationale Veröffentlichungsnummer: WO 2021/197544

(56) Entgegenhaltungen:
- WO-A1-2017/194246
- DE-A1- 3 122 876
- DE-A1- 10 207 144
- DE-C- 670 330
- US-A- 2 543 117
- US-A- 3 701 539

## Beschreibung

Die Erfindung betrifft einen nach dem Oberbegriff des Anspruchs 1 ausgebildeten, mehrere Spannzähne aufweisenden Spanneinsatz für Spannbacken eines Spannfutters. Ferner betrifft die Erfindung ein Verfahren nach dem Oberbegriff des Anspruchs 13 zum Spannen eines verzahnten Bauteils an dessen Verzahnung, das heißt Außen- oder Innenverzahnung. Ein derartiger Spanneinsatz ist aus der DE 31 22 876 A1 bekannt und ein derartiges Verfahren ist aus der DE 102 07 144 A1 bekannt.

Ein Spanneinsatz für ein Spannfutter ist beispielsweise aus der EP 1 683 596 B1 bekannt. Der bekannte Spanneinsatz weist einen Grundkörper auf, welcher zur Verbindung mit einem Spannbacken eines Spannfutters vorgesehen ist. Der Grundkörper ist mit einem oder mehreren Spannzähnen versehen und weist eine Anlagefläche als Anschlag für ein zu spannendes Werkstück auf. Die Spannzähne sind im Fall der EP 1 683 596 B1 unter Verdrängung von Material in das Werkstück einzudrücken.

Die DE 31 22 876 A1 beschreibt Greiferbacken für als Kraft- oder Handspannfutter ausgebildete Backenfutter an Werkzeugmaschinen. Die Greiferbacken weisen jeweils eine mit einer radialen Stelleinrichtung des Backenfutters gekoppelte Stellbacke mit einer Spannverzahnung zum Halten eines Werkstücks auf. Die Spannverzahnung ist hierbei an einem separaten Spanneinsatz angeordnet, der in einer Axialführung der Stellbacke drehfest eingesetzt ist. Der Spanneinsatz kann derart mit einer Schraube gehalten sein, dass ein Radialspiel des Spanneinsatzes gegeben ist. Ein Verdrehen des Spanneinsatzes wird durch Seitenwände einer Axialführung, welche den Spanneinsatz führt, verhindert.

Spannkralleneinsätze, welche an Spannbacken von Werkzeugmaschinen lösbar befestigt sind, sind auch in der DE 38 10 854 A1 beschrieben. Die Spannkralleneinsätze bestehen in diesem Fall aus Walzenkörpern, die mit ihrer Längsachse parallel zur Drehachse des zu spannenden Werkstücks in Aufnahmeöffnungen einschiebbar und darin drehbeweglich gelagert sind. Zugleich sind die Spannkralleneinsätze in ihren Achs- und Querrichtungen formschlüssig abgestützt. Eine Befestigungsschraube, mit welcher ein Spannkralleneinsatz befestigt ist, belässt dem Spannkralleneinsatz Bewegungsspiel. Eine Exzentrizität zwischen dem Spannkralleneinsatz und der Befestigungsschraube soll zusammen mit einer geeigneten Passung dafür sorgen, dass sich der Spannkralleneinsatz beim Schließen des Spannfutters stets mit den Spannzähnen in Richtung zur Oberfläche des Werkstücks selbsttätig einstellt.

Die DE 10 2008 064 525 A1 offenbart ein Verfahren zum Verbinden einer Spannbacke mit einer Spanneinrichtung. Hierbei weist die Spanneinrichtung mehrere Spannelementaufnahmen auf, in welchen jeweils ein Spannelement mit Hilfe eines schräg zur Spannrichtung verlaufenden Bereichs der Spannelementaufnahme geführt ist. Das Spannelement ist aus einem Spannbackenträger und einer Spannbacke zusammengesetzt, wobei die Spannbacke in einen Hinterschnitt des Spannbackenträgers eingreift und zusätzlich mittels einer formschlüssigen Fixierung befestigt ist.

Ein zum Spannen eines außenverzahnten Bauteils geeignetes Spannfutter ist aus der DE 670 330 A bekannt. Bei dem bekannten Spannfutter handelt es sich um ein Dreibackenfutter zum Spannen von Zahnrädern an den Flanken der Zähne. Die drei Spannbacken sind mit ebenen Flächen versehen, die Seitenflächen eines gedachten gleichseitigen Dreiecks bilden. Im Fall der DE 670 330 A werden drei Zahnstangen verwendet, die in das zu spannende Zahnrad eingreifen. Die Zahnstangen sind mit Hilfe von Rollen an den Backen des Spannfutters gelagert, so dass sie sich entsprechend der gewünschten Dreieckform ausrichten können.

Ein weiteres Spannfutter für Zahnräder ist aus der DE 1 104 855 B bekannt. Dieses Spannfutter weist einzelne Zähne auf, welche zwischen die Zähne des zu spannenden Zahnrades eingreifen. Die Anzahl der Zähne des Spannfutters entspricht somit der Anzahl der Zähne des Zahnrades.

Ein Spannfutter mit Einzelzähnen, welche in die Verzahnung eines zu spannenden Zahnrades eingreifen, ist auch in der US 2,678,824 A beschrieben. In diesem Fall greifen die Einzelzähne des Spannfutters in jede zweite Zahnlücke des zu spannenden Zahnrades ein.

Zum Spannen eines verzahnten Werkstücks ist auch eine in der US 2,543,117 A beschriebene Spannvorrichtung vorgesehen. Austauschbare, verzahnte Spanneinsätze sind hierbei jeweils mit einer einzelnen Schraube gehalten, welche ein Langloch des Spanneinsatzes durchdringt und damit Einstellmöglichkeiten bietet.

Als Vierbackenfutter ausgebildete Spannfutter zum Klemmen eines Zahnrades sind in den Dokumenten CN 201389762 Y und CN 101508040 A offenbart. Einstellmöglichkeiten sind hierbei durch Einstellbolzen gegeben. Eine weitere Vorrichtung zum Zentrieren und Sichern von Zahnrädern ist in der RU 2069124 A offenbart.

Verschiedenste bekannte Vorrichtungen nutzen zum Spannen von Zahnrädern Vorrichtungen, die Rollen aufweisen, welche zwischen die Zähne des zu spannenden Zahnrades eingreifen. In diesem Zusammenhang wird beispielhaft auf die Dokumente DD 19 486 A1, DE 34 43 487 C2, DE 1 808 894 A und DE 76 22 766 U hingewiesen.

Ferner sind zum Spannen von außenverzahnten Zahnrädern Vorrichtungen bekannt, welche gegeneinander verschwenkbare Teile aufweisen. In diesem Zusammenhang wird beispielhaft auf die Dokumente US 2,445,184 A und EP 1 493 518 A1 hingewiesen.

Eine Vorrichtung zum Einspannen eines außenverzahnten Werkstücks, welche besonders für die Verwendung in einer Mess- oder Prüfmaschine konzipiert ist, ist in der EP 2 700 461 B1 beschrieben. In diesem Fall sind in einander greifende Verzahnungen verschiedener Teile so ausgelegt, dass eine neutrale Winkelstellung einnehmbar ist, in welcher die Zahnflanken der verschiedenen Verzahnungen keinen Kontakt zueinander haben.

Die DE 102 07 144 A1 beschreibt ein Verfahren und eine Vorrichtung zum Aufnehmen von dünnwandigen, ringförmigen oder zylindrischen Werkstücken für die Bearbeitung. Es sind mindestens drei in radialer Richtung wirkende Spannelemente und mindestens zwei tangentiale Spannelemente vorhanden.

Der Erfindung liegt die Aufgabe zugrunde, das Spannen von außen- oder innenverzahnten Bauteilen an deren Außen- beziehungsweise Innenverzahnung auch unter Bedingungen der Serienfertigung besonders rationell und prozesssicher zu gestalten.

Diese Aufgabe wird erfindungsgemäß gelöst durch einen Spanneinsatz mit den Merkmalen des Anspruchs 1. Ebenso wird die Aufgabe gelöst durch ein Verfahren zum Spannen eines außenverzahnten Bauteils gemäß Anspruch 13. Im Folgenden im Zusammenhang mit dem Spannverfahren erläuterte Ausgestaltungen und Vorteile der Erfindung gelten sinngemäß auch für die Vorrichtung, das heißt den Spanneinsatz, und umgekehrt.

Die Erfindung geht von der Überlegung aus, dass bei der Bearbeitung serienmäßig hergestellter, außen- oder innenverzahnter Bauteile, die einer Wärmebehandlung unterzogen wurden, verschiedene Herausforderungen zu bewältigen sind. Zum einen ist es denkbar, dass durch die Wärmehandlung ein Verzug auftritt, das heißt die Bauteile unrund werden. Zum anderen können Zähne der Bauteile einen Hinterschnitt an den Zahnflanken aufweisen. Insbesondere kann, in radialer Draufsicht auf die Verzahnung des Werkstücks, eine Pfeilform der Zähne gegeben sein. Zur weiteren, der Wärmehandlung folgenden Bearbeitung erfolgt ein Runddrücken der Bauteile, wobei die Bauteile idealerweise am Teilkreisdurchmesser der Verzahnung zu halten sind, ohne die Zahnflanken zu beschädigen. Auch im Fall von verzahnten Weichteilen, das heißt noch nicht gehärteten Werkstücken, die entweder von innen oder von außen an ihrer Verzahnung zu spannen sind, sind Herausforderungen beim Spannen denkbar, welche beispielsweise mit einer nicht idealen, unrunden Form eines Kopfkreises des Werkstücks zusammenhängen.

Ausgehend von diesen Überlegungen wird ein Spanneinsatz für Spannbacken eines Spannfutters vorgeschlagen, welcher ein mehrteilig aufgebautes, an einem Spannbacken zu befestigendes Haltesegment aufweist, in welchem einzelne Spannzähne gehalten sind. Die Spannzähne beschreiben insgesamt eine korrespondierend zur Dimensionierung eines zu spannenden, verzahnten Bauteils gekrümmte, verzahnte Eingriffskontur. Im Fall eines außenverzahnten Bauteils ist die Krümmung der Eingriffskontur konkav, im Fall eines von innen zu spannenden, innenverzahnten Bauteils konvex. Dies bedeutet in beiden Fällen insbesondere, dass die Spitzen der Spannzähne, welche in die Verzahnung des Bauteils, das heißt Werkstücks mit kreisrunder Querschnittsform, eingreifen, auf einem zum Werkstück konzentrischen Kreis liegen.

Die meisten der Spannzähne, welche an ein und demselben Haltesegment angeordnet sind, insbesondere sämtliche Spannzähne, sind mit Spiel in Umfangsrichtung, bezogen auf das Spannfutter, im Haltesegment aufgenommen. Sofern ein einzelner Spannzahn spielbehaftet im Haltesegment angeordnet ist, ist zumindest ein Spiel des betreffenden Zahns in Umfangsrichtung des Spannfutters und damit auch des zu spannenden Bauteils gegeben. Ein Spiel in Axialrichtung des Spannfutters existiert dagegen höchstens in untergeordnetem Maße.

Insgesamt ist eine Mehrzahl an Spanneinsätzen, das heißt ein Set an Spanneinsätzen, zur Verwendung bei einem Spannfutter prinzipiell bekannter Bauart vorgesehen. Hierbei sind nicht notwendigerweise sämtliche Spanneinsätze des Sets gleichartig gestaltet. Vielmehr ist in vorteilhafter Ausgestaltung eine erste Teilmenge des Sets von einer zweiten Teilmenge unterscheidbar. Hierbei umfasst die erste Teilmenge ausschließlich spielbehaftete Spannzähne, wogegen die zweite Teilmenge genau einen spielfrei gehaltenen Spannzahn pro Spanneinsatz aufweist. Ist die zweite Teilmenge aus drei Spanneinsätzen gebildet, so existieren dementsprechend genau drei spielfrei fixierte Spannzähne, welche zum Eingriff in die Außenverzahnung des zu spannenden Bauteils vorgesehen sind.

Von insgesamt sechs Spanneinsätzen, die am Umfang des zu spannenden Werkstücks angeordnet und alternierend der ersten und der zweiten Teilmenge zuzurechnen sind, sind nicht notwendigerweise sämtliche Spanneinsätze nach dem Anspruch 1 ausgebildet. In allen Fällen handelt es sich bei den Spanneinsätzen, welche der ersten Teilmenge zuzurechnen sind, um Spanneinsätze, die die Merkmale des Anspruchs 1 aufweisen.

Die verschiedenen Spanneinsätze werden insbesondere derart an den Spannbacken des Spannfutters angebracht, dass die drei spielfrei fixierten Spannzähne gleichmäßig, das heißt in Abständen von 120°, am Umfang des Bauteils verteilt sind. Alle übrigen Spannzähne richten sich beim Spannen des Bauteils selbsttätig aus. Auch die erste Teilmenge an Spanneinsätzen umfasst in typischer Ausgestaltung genau drei Spanneinsätze. Das Set eignet sich damit für die Verwendung bei einem Spannfutter mit sechs Spannbacken.

Was die Spanneinsätze der zweiten Teilmenge betrifft, existieren verschiedene Gestaltungsmöglichkeiten: Gemäß einer ersten möglichen Variante umfasst jeder Spanneinsatz der zweiten Teilmenge drei Spannzähne, wobei der mittlere Spannzahn spielfrei gehalten ist, während die beiden übrigen, das heißt seitlichen Spannzähne desselben Spanneinsatzes mit Spiel in Umfangsrichtung geführt sind. Alternativ umfasst jeder Spanneinsatz der zweiten Teilmenge lediglich einen einzigen Spannzahn. Dieser kann beispielsweise mittels einer zweiflügeligen Formschlusskontur spielfrei und verdrehgesichert im Haltesegment fixiert sein. Die Verdrehsicherung bezieht sich hierbei auf die Mittelachse des zweiflügeligen Spannzahns, welcher im Übrigen eine zylindrische Grundform hat.

Zweiflügelige Spannzähne sind auch geeignet, mit Spiel in Umfangsrichtung im Haltesegment geführt zu werden. In diesem Fall ist jeder Flügel des Spannzahns in einer Ausnehmung des Halteelements aufgenommen, welche breiter, das heißt in Umfangsrichtung des Spannfutters ausgedehnter, als der Flügel ist, wobei sowohl die Flügel als auch die zugehörigen Ausnehmungen eine Krümmung entsprechend einem Teilkreis, der durch sämtliche Flügel der Spannzähne gelegt ist, aufweisen. Auf diese Weise ist sowohl die gewünschte Verschiebbarkeit als auch die verdrehgesicherte Halterung der Spannzähne gegeben.

Allgemein ist ein schonendes Spannen eines außenverzahnten Bauteils oder auch eines Innenverzahnten Bauteils an dessen Verzahnung möglich, indem mehrere Spanneinsätze, welche jeweils eine korrespondierend zur Dimensionierung des außenverzahnten Bauteils konkav gekrümmte beziehungsweise im Fall eines innenverzahnten Bauteils konvex gekrümmte, durch einzelne Spannzähne gebildete Eingriffskontur aufweisen, in Eingriff mit der Verzahnung des zu spannenden Bauteils gebracht werden, wobei insgesamt genau drei der Spannzähne spielfrei in einem Spanneinsatz fixiert sind, während alle übrigen Spannzähne spielbehaftet, nämlich mit Spiel in Umfangsrichtung des Spannfutters, in den Spanneinsätzen geführt werden.

Die konkave beziehungsweise konvexe Krümmung der Eingriffskontur eines jeden Spanneinsatzes ermöglicht eine besonders gute Anpassung an die Geometrie des zu spannenden Bauteils, insbesondere Zahnrades, ohne hierfür Rollen zu verwenden, wie sie im genannten Stand der Technik vielfach beschrieben sind. Durch die Anpassung der Geometrie der Eingriffskontur an das Profil der Außen- oder Innenverzahnung des zu spannenden Bauteils ist zudem eine besonders stabile und zugleich materialschonende Halterung des Bauteils im Spannfutter möglich.

Das mehrteilige Haltesegment, in welchem die Spannzähne spielfrei oder mit definiertem Spiel gehalten sind, umfasst gemäß einer möglichen Ausgestaltung drei aufeinander liegende, fest miteinander verbundene Segmentstücke, nämlich ein zur Auflage auf einem Grundkörper einer Spannbacke vorgesehenes Unterlagesegment, ein auf diesem aufliegendes Mittelsegment, sowie ein das Mittelsegment abdeckendes Topsegment, wobei Aussparungen zur Aufnahme jeweils eines Spannzahns ausschließlich in dem sandwichartig zwischen den beiden anderen Segmenten angeordneten Mittelsegment ausgebildet sind. Somit dient jedes der beiden äußeren Segmentstücke, das heißt das Unterlagesegment und das Topsegment, als Axialanschlag gegenüber den Spannzähnen, wobei sich die Axialrichtung auf die Mittelachse des Spannfutters sowie des zu spannenden Bauteils bezieht. In alternativer Ausgestaltung ist auch ein Aufbau des Haltesegmentes aus lediglich zwei Teilen oder sogar ein einteiliger Aufbau des die Spannzähne führenden Haltesegments möglich.

Die einzelnen Spannzähne können eine dreieckige oder trapezförmige Gestalt, das heißt die Grundform eines Keils, aufweisen. Die Keilform der Zähne, welche zumindest in einigen Fällen nicht starr am Spanneinsatz angeordnet sind, begünstigt beim Spannen deren sogenanntes Einschwimmen, wobei in Keilrichtung ein Niederzug gegen einen Anschlag erzeugt wird. Der Keil, welcher durch den Spannzahn beschrieben wird, ist hierbei gegen den Anschlag gerichtet. Es hat sich gezeigt, dass es hinsichtlich des Niederzugs vor Vorteil ist, wenn die Flanken der Spannzähne asymmetrisch geformt, insbesondere gestuft, sind, wobei sich an jeder Flanke des Spannzahns beispielsweise zwei Stufen befinden, was mit drei voneinander getrennten Flächen an jeder Flanke gleichbedeutend ist.

Die Aufteilung der Zahnflanke in einzelne, durch Stufen voneinander getrennte Teilflächen ist im Fall einer asymmetrischen Zahngestaltung bei der linken Zahnflanke signifikant anders als bei der rechten Zahnflanke. Dabei ist es möglich, dass eine einzelne Teilfläche, welche der linken Zahnflanke zuzurechnen ist, die gleiche Form wie eine der Teilflächen der rechten Zahnflanke hat, das heißt eine partielle Symmetrie der Zahnform gegeben ist. Insbesondere können die an die Zahnspitze anschließenden Flankenabschnitte des Spannzahns gleich lang sein. Diese Flankenabschnitte können derart schräg gestellt sein, dass sie Ebenen beschreiben, welche vor einer der Stirnseiten des Spannzahns zusammenlaufen, was gleichbedeutend damit ist, dass eine der Stirnseiten eine kleinere Fläche als die andere Stirnseite einnimmt. Anders ausgedrückt: Die Schnittlinie zwischen den beiden an die Flankenabschnitte gelegten Ebenen schneidet die Ebenen, in welchen die Stirnflächen des Spannzahns liegen, jeweils in einem spitzen Winkel. Dies ermöglicht eine besonders gute Anpassung an komplexe Geometrien verzahnter Werkstücke. Der Spannzahn hat hierbei eine doppelte Asymmetrie: Zum einen sind die beiden Flanken das Spannzahns ungleich ausgebildet. Zum anderen unterscheiden sich die beiden zueinander parallelen Stirnflächen des Spannzahns voneinander. Besonders die Asymmetrie der Flanken ist eine wirksame Maßnahme zur Sicherstellung des korrekten Einsetzens des Spannzahns in den Spanneinsatz.

Insbesondere im Fall einer partiell, nämlich in einem an die Zahnspitze angrenzenden Bereich, symmetrischen Zahnform können sich ein mittlerer Flankenabschnitt und ein an den Zahnfuß grenzender äußerer Flankenabschnitt zusammen über mehr als die Hälfte der in Radialrichtung des Spannfutters zu messenden Zahnhöhe erstrecken. Das Verhältnis zwischen der Höhe des äußeren Flankenabschnitts und der Höhe des mittleren Flankenabschnitts kann dabei im Fall der ersten Zahnflanke mindestens 7 : 10 und höchstens 13 : 10 und im Fall der zweiten Zahnflanke mindestens 17 : 10 und höchstens 23 : 10 betragen.

Der der Zahnspitze gegenüberliegende, sich innerhalb des Spanneinsatzes abstützende Zahnboden, das heißt Zahnrücken, des Spannzahns beschreibt in vorteilhafter Ausgestaltung einen Kreisbogen, welcher konzentrisch zum gesamten Spannfutter ist. Dies begünstigt Positionskorrekturen des Spannzahns in Umfangsrichtung des Spannfutters. Im Fall des Spannens eines außenverzahnten Bauteils ist der Zahnrücken konvex gekrümmt. Ist der Spanneinsatz zum Spannen eines Bauteils an dessen Innenverzahnung vorgesehen, so ist der Zahnrücken konkav gekrümmt.

Unabhängig vor der Querschnittsgestaltung der Spannzähne kann jeder Spanneinsatz eine ungerade Anzahl an Spannzähnen, insbesondere drei Spannzähne, aufweisen. Sofern einer der Spannzähne des Spanneinsatzes fixiert, das heißt spielfrei im Haltesegment befestigt ist, handelt es sich hierbei um den mittleren Spannzahn. Unabhängig von der Anzahl an Spannzähnen pro Spanneinsatz, kann - sofern diese Anzahl mindestens zwei beträgt - der in Umfangsrichtung zu messende Abstand zwischen den Spannzähnen das Doppelte des Abstandes zwischen den Zähnen des zu spannenden Bauteils betragen. Optional sind die starr mit den Spannbacken verbundenen Komponenten der Haltesegmente verstellbar an die jeweiligen Spannbacken des Spannfutters angebunden. Theoretisch ist das außenverzahnte Bauteil bereits mit drei fest an jeweils einer Spannbacke angebrachten Spannzähnen spannbar. Die restlichen, spielbehaftet geführten Spannzähne dienen der gleichmäßigeren Krafteinleitung in das zu spannende Bauteil und damit der Schonung dessen Verzahnung. Durch die voneinander beabstandete Anordnung der Spannzähne eines Haltesegments, so dass diese lediglich in jeden zweiten Zwischenraum der Außenverzahnung des zu spannenden Bauteils eingreifen, steht ein ausreichend breiter Raum für die spielbehaftete Halterung der Spannzähne zur Verfügung.

Durch die Eingriffskonturen sämtlicher Spanneinsätze kann insgesamt eine Anzahl an Zähnen gebildet sein, welche weniger als der Hälfte der Anzahl der Zähne der Außenverzahnung des zu spannenden Bauteils entspricht. Beispielsweise entspricht die Gesamtzahl der Zähne des Sets an Spanneinsätzen mindestens einem Viertel und maximal der Hälfte der Anzahl der Zähne der Außenverzahnung des zu spannenden Werkstücks.

Insgesamt wird das zu spannende Bauteil durch die Spanneinsätze an mehreren Umfangsabschnitten gegriffen, welche sich beispielsweise auf einen Wert von mehr als 210° summieren. Die in das Bauteil eingreifenden Spannzähne sind beispielsweise auf sechs Spanneinsätze verteilt, so dass sich jeder der genannten Umfangsabschnitte über mindestens 35° erstreckt. Ein handelsübliches Spannfutter kann mit vertretbarem Aufwand mit den Spanneinsätzen, welche zum Greifen einer Außenverzahnung vorgesehen sind, ausgerüstet werden. Analoges gilt für Spannfutter, welche ein Werkstück an einer Innenumfangsfläche, hier einer Innenverzahnung, spannen.

Bei dem zu spannenden Bauteil handelt es sich beispielsweise um ein Zahnrad für ein Stirnradgetriebe oder um einen Kupplungskörper einer Synchronisationsvorrichtung für ein Schaltgetriebe.

Nachfolgend werden mehrere Ausführungsbeispiele der Erfindung anhand einer Zeichnung näher erläutert. Hierin zeigen:
- Fig. 1: ein Spannfutter zum Spannen eines außenverzahnten Bauteils mit Hilfe eines Sets an Spanneinsätzen in Frontansicht,
- Fig. 2: die an dem Spannfutter befestigten Spanneinsätze in Seitenansicht,
- Fig. 3: die Anordnung nach Fig. 2 in perspektivischer Ansicht,
- Fig. 4: ein Detail des Spannfutters mit einem an einer Spannbacke befestigten Spanneinsatz sowie einem gespannten, außenverzahnten Bauteil,
- Fig. 5: einen erster Spanneinsatz des Sets an Spanneinsätzen in Explosionsdarstellung,
- Fig. 6: einen zweiten, zum Set an Spanneinsätzen gehörenden Spanneinsatz in Explosionsdarstellung,
- Fig. 7: einen asymmetrischen Spannzahn in einer Schnittdarstellung,
- Fig. 8: in vereinfachter Darstellung die Spannung eines Werkstücks mittels eines Spanneinsatzes, welcher Spannzähne nach Fig. 7 umfasst,
- Fig. 9: die Positionierung mehrerer Spannzähne nach Fig. 7 in einem Spanneinsatz eines ein verzahntes Werkstück spannenden Spannfutters,
- Fig. 10: die Spannung eines verzahnten Werkstücks mit einem lediglich einen einzigen Spannzahn aufweisenden Spanneinsatz in einer Ansicht analog Fig. 9,
- Fig. 11: die Anordnung nach Fig. 10 mit einer zusätzlichen, den Spannzahn teilweise abdeckenden Komponente des Spanneinsatzes,
- Fig. 12: den Spannzahn nach Fig. 7 in Draufsicht,
- Fig. 13: eine schematische Schnittdarstellung des Spannzahn nach Fig. 12,
- Fig. 14: einen zum Spannen eines Werkstücks an einer Innenverzahnung vorgesehenen Spannzahn in einer Darstellung analog Fig. 7,
- Fig. 15: ein Detail eines außenverzahnten, mit Spannzähnen nach Fig. 7 zu spannenden Werkstücks, nämlich Kupplungskörpers.

Die folgenden Erläuterungen beziehen sich, soweit nicht anders angegeben, auf sämtliche Ausführungsbeispiele. Einander entsprechende oder prinzipiell gleichwirkende Teile sind in allen Figuren mit den gleichen Bezugszeichen gekennzeichnet.

Ein insgesamt mit dem Bezugszeichen 1 gekennzeichnetes Spannfutter weist in den Ausführungsbeispielen sechs Spannbacken 2 auf. An Grundbacken 3 der Spannbacken 2 ist jeweils ein Spanneinsatz 5 befestigt. Die Spannbacken 2 sind mit einer Basisbaugruppe 6 des Spannfutters 1 gekoppelt, wie prinzipiell von handelsüblichen Spannfuttern her bekannt.

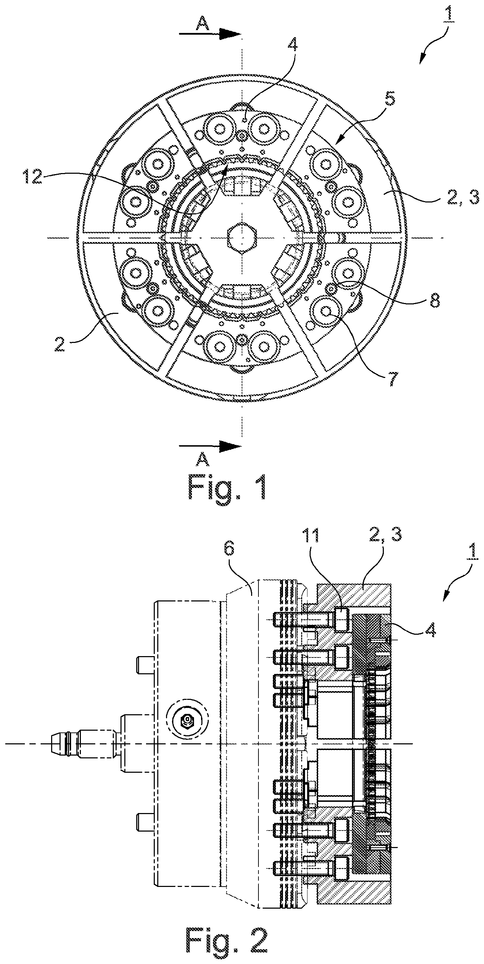

Jeder Spanneinsatz 5 umfasst ein mehrteiliges Haltesegment 4, welches in stirnseitiger Ansicht (Fig. 1) die Grundform eines Ringsegments hat. Das Haltesegment 4 ist mit Schrauben 7 an der zugehörigen Grundbacke 3, das heißt am Grundkörper, befestigt. Schrauben, mit denen die Spannbacken 2 an die Basisbaugruppe 6 angebunden sind, sind mit 11 bezeichnet. Möglich ist auch eine einteilige Ausbildung von Grundbacken 3 und Spannbacken 2 sowie eine einteilige Ausbildung von Haltesegment 4 und Spanneinsatz 5.

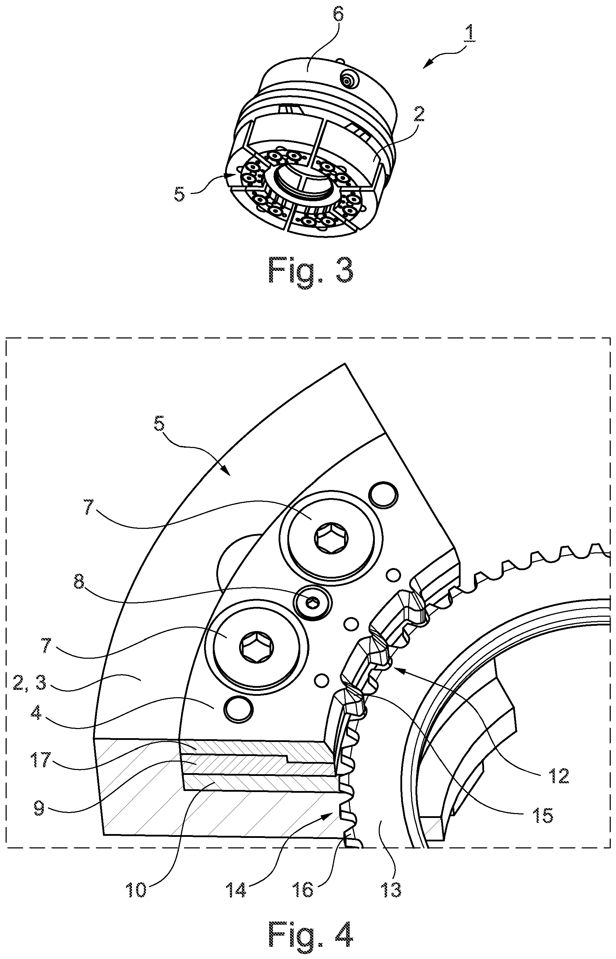

Jedes Haltesegment 4 ist im Fall von Figur 4 aus drei unmittelbar aufeinander liegenden Segmentstücken 9, 10, 17 aufgebaut. Hierbei handelt es sich um ein den Grundkörper 3 kontaktierendes Unterlagesegment 10, ein auf diesem aufliegendes Mittelsegment 9, sowie ein das Mittelsegment 9 abdeckendes Topsegment 17. Die Schrauben 7 durchdringen alle drei Segmentstücke 9, 10, 17. Dagegen ist eine im Vergleich zu den Schrauben 7 kleinere Schraube 8 pro Spanneinsatz 5 lediglich zum Zusammenhalten der Segmentstücke 9, 10, 17 vorgesehen. Die Schrauben 8 können beim Zusammenbau der Spanneinsätze 5 als Führungsstifte verwendet werden.

Durch jeden Spanneinsatz 5 ist eine konkav gekrümmte, verzahnte Eingriffskontur 12 gebildet, die zur direkten Zusammenwirkung mit einer Verzahnung 14 eines zu spannenden Bauteils 13 vorgesehen ist. Um das Einsetzen des Bauteils 13 zwischen die Spanneinsätze 5 zu erleichtern, weist das Topsegment 17 eines jeden Haltesegments 4 drei zahnförmige Einführhilfen 15 auf. Sobald das Bauteil 13, dessen Zähne mit 16 bezeichnet sind, gespannt sind, haben die Einführhilfen 15 keine Funktion mehr.

Zum Angriff an der Verzahnung 14 sind vielmehr pro Spanneinsatz 5 drei Spannzähne 18 vorhanden, welche sich - bezogen auf die stirnseitig Ansicht nach Fig. 1 - hinter den Einführhilfen 15 befinden. Die Spannzähne 18 sind in Ausnehmungen 19 des Mittelsegments 9 eingesetzt. Im Bereich der Ausnehmungen 19, welche jeweils einen Zahnsitz darstellen, weist das Mittelsegment 9 eine im Vergleich zum Rest des Mittelsegments 9 verringerte Wandstärke auf. In korrespondierender Weise ist die Wandstärke des Topsegments 17 in demjenigen Bereich, in welchem sich die Einführhilfen 15 befinden, das heißt im inneren, am geringsten von der Mittelachse des Spannfutters 1 entfernten Bereich, im Vergleich zum restlichen, weiter außen liegenden Bereich des Topsegments 17 vergrößert. Dies drückt sich in einer kreisbogenförmig gekrümmten Stufe 20 innerhalb des Topsegments 17 und einer entsprechend gekrümmten, hieran anliegenden Stufe 21 des Mittelsegments 9 aus. Die gestufte Ausbildung des Topsegments 17 gestattet eine in Axialrichtung des Spannfutters 1 in Relation zur Dicke des überwiegenden Teils des Topsegments 17 große Ausdehnung der Einführhilfen 15.

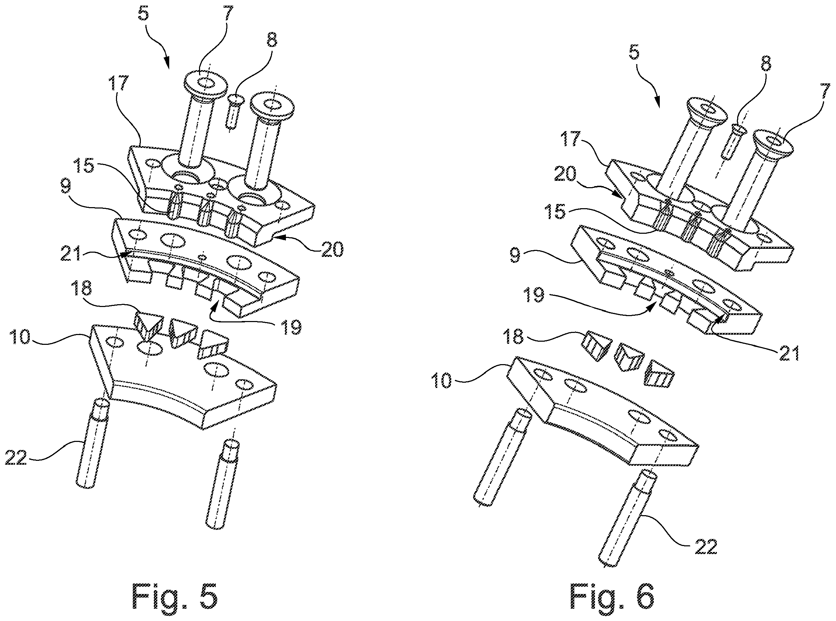

Zur präzisen Positionierung der insgesamt sechs Unterlagesegmente 10 auf den zugehörigen Grundkörpern 3 sind zwei Bolzen 22 pro Haltesegment 4 vorgesehen. Während die Unterlagesegmente 10 sowie die Topsegmente 17 sämtlicher Haltesegmente 4 identisch konturiert sind, ist dies bei den Mittelsegmenten 9 nicht der Fall. Vielmehr ist ein 6-teiliges Set an Spanneinsätzen 5 durch drei Spanneinsätze 5 ersten Typs (Fig. 5) und drei mit bloßem Auge hiervon nicht oder jedenfalls nicht einfach zu unterscheidende Spanneinsätze 5 zweiten Typs (Fig. 6) gebildet. Spanneinsätze 5 des ersten und des zweiten Typs sind alternierend am Umfang des Spannfutters 1 angeordnet.

Innerhalb der Spanneinsätze 5 ersten Typs weist jede Ausnehmung 19 die gleichen Abmessungen auf, so dass die in die Ausnehmungen 19 eingesetzten Spannzähne 18 in gleicher Weise spielbehaftet geführt sind. Im Unterschied hierzu ist beim Spanneinsatz 5 zweiten Typs die mittlere der drei Ausnehmungen 19 verengt ausgeführt, so dass der mittlere Spannzahn 18 ohne Spiel im betreffenden Spanneinsatz 5 fixiert ist.

Von den insgesamt achtzehn (sechsmal drei Stück) Spannzähnen 18, welche gemäß Figur 1 vorhanden sind, sind somit lediglich drei Stück starr mit dem zugehörigen Grundkörper 3 gekoppelt, während die restlichen fünfzehn Spannzähne 18 mit Spiel, insbesondere in Umfangsrichtung des Spannfutters 1, in den sechs Spanneinsätzen 5 angeordnet sind. Die drei an jeweils einem Grundkörper 3 fixierten Spannzähne 18 sind in Abständen von 120° am Umfang des Spannfutters 1 angeordnet.

Die einzelne Spannzähne 18 eines jeden Spanneinsatzes 5 greifen in jede zweite Zahnlücke der Verzahnung 14 des Bauteils 13 ein. Jeder der sechs Spanneinsätze 5 erstreckt sich, um die Verstellbarkeit der Spannbacken 2 sicherzustellen und zugleich ein Greifen des Bauteils 13 an einem Großteil seines Umfangs zu ermöglichen, über etwas weniger als 60° am Umfang des Bauteils 13. Die sechs Umfangsabschnitte, an denen das Bauteil 13, das heißt außenverzahnte Zahnrad, durch die Spanneinsätze 5 gegriffen wird, summieren sich auf einen Gesamtwert von mehr als 210°. Hierbei ist jedes Umfangssegment des Bauteils 13, das von einem Spanneinsätze 5 gegriffen wird, zwischen denjenigen Zahnlücken der Verzahnung 14 zu messen, in die die beiden äußeren, in jedem Fall spielbehafteten Zähne 15 eines Spanneinsatzes 5 eingreifen. Die Breite eines solchen Umfangssegmentes entspricht damit dem vierfachen Zahnabstand der Außenverzahnung 14.

Durch die größtenteils spielbehaftete Halterung der Spannzähne 18 wird beim Greifen des Bauteils 13 mit dem Spannfutter 1, an welches das Set an Spanneinsätzen 5 angebaut ist, ein Einschwimmen der Eingriffskontur 12 ermöglicht. Insgesamt wird das Bauteil 13 damit unter bestmöglicher Schonung der Verzahnung 14 gespannt. Dies gilt selbst in Fällen, in denen die Zähne 16 der Verzahnung 14 eine von ihrer geometrischen Idealform fertigungsbedingt abweichende Form haben.

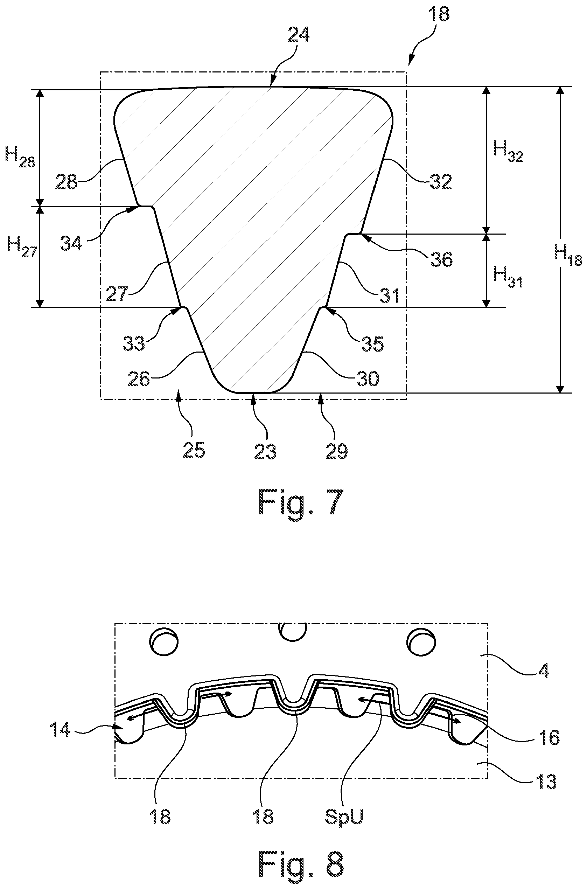

Die Figur 7 zeigt einen asymmetrisch gestalteten Spannzahn 18, welcher für die Verwendung im Spannfutter 1 nach Figur 1 geeignet ist. Eine Zahnspitze des Spannzahns 18 ist mit 23, ein Zahnboden, das heißt Zahnrücken, mit 24 bezeichnet. Zahnflanken 25, 29 werden als linke und rechte Zahnflanke bezeichnet. Jede Zahnflanke 25, 29 ist, wie aus Figur 7 hervorgeht, in drei Flankenabschnitte 26, 27, 28 beziehungsweise drei Flankenabschnitte 30, 31, 32 unterteilt. Zwischen den Flankenabschnitten 30, 31, 32 sind Stufen 35, 36 erkennbar. Die Flankenabschnitte 26, 27, 28 sind durch Stufen 33, 34 voneinander getrennt.

Die Flankenabschnitte 26, 30 sind gleich lang und spiegelsymmetrisch zueinander ausgebildet. Dementsprechend sind die Stufen 33, 35 auf gleicher Höhe des Zahns 18, dessen Höhe insgesamt mit H₁₈ angegeben ist, angeordnet. Die Asymmetrie des Zahns 18 kommt ausschließlich im Bereich der Flankenabschnitte 27, 28, 31, 32 zum Ausdruck. Der Flankenabschnitt 27 an der linken Zahnflanke 25 ist deutlich ausgedehnter als der gegenüberliegende Flankenabschnitt 31, welcher den mittleren Abschnitt der rechten Zahnflanke 29 darstellt. Umgekehrt ist der linke, an den Zahnboden 24 grenzende Flankenabschnitt 28 deutlich kürzer als der rechte, ebenfalls an den Zahnboden 24 grenzende Flankenabschnitt 32. Die in Radialrichtung des Spannfutters 1 zu messenden Höhen der Flankenabschnitte 27, 28, 31, 32 sind mit H₂₇, H₂₈, H₃₁, H₃₂ bezeichnet. Die Summe aus H₂₇ und H₂₈ entspricht der Summe aus H₃₁ und H₃₂. Insgesamt erstreckt sich der asymmetrische, durch die Flanken 27, 28, 31, 32 gebildete Teil des Zahns 18 über mehr als die Hälfte dessen Höhe H₁₈.

Die Anordnung der Spannzähne 18 nach Figur 7 im Haltesegment 4 ist in Figur 8 vereinfacht dargestellt. Mit SpU ist das Spiel der Spannzähne 18 in Umfangsrichtung des Werkstücks 13 sowie des Spannfutters 1 bezeichnet. Entsprechend der Anordnung nach Figur 4 greifen auch gemäß Figur 8 Spannzähne 18 lediglich in jede zweite Zahnlücke des außenverzahnten Werkstücks 13 ein.

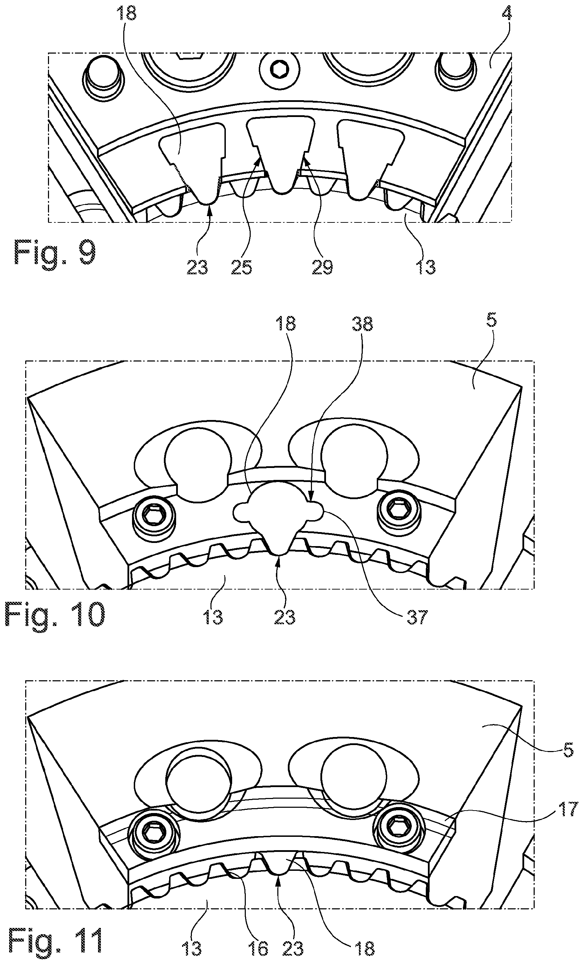

Wie aus Figur 9 hervorgeht, ist jeder Spannzahn 18 deutlich größer als jeder einzelne Zahn 16 des Bauteils 13. Eine Abdeckung der Spannzähne 18, welche diese in Axialrichtung sichert, ist in Figur 9 nicht dargestellt.

Ein komplettes Spannfutter 1 umfasst drei gleichartige Spanneinsätze 5, welche jeweils eine Dreier-Anordnung an spielbehafteten Spannzähne 18 aufweisen. Zusätzlich umfasst dasselbe Spannfutter 1 drei Spanneinsätze 5, welche, wie in Fig. 7 veranschaulicht ist, ebenfalls jeweils drei Spannzähne 18 aufweisen, wobei in diesem Fall jedoch jeweils die beiden äußeren Spannzähne 18 spielbehaftet sind. Insgesamt umfasst das Spannfutter 1 damit 15 spielbehaftete Spannzähne 18.

In Figur 10 ist ein Spanneinsatz 5 mit lediglich einem einzigen Spannzahn 18 dargestellt. Dieser Spannzahn 18 unterscheidet sich in seiner Querschnittsform deutlich von den keilförmigen, in Figur 7 dargestellten Spannzähnen 18. Der Spannzahn 18 gemäß Figur 10 hat eine symmetrische, walzenförmige Grundform, wobei an den beiden Seiten des Spannzahns 18, das heißt um jeweils 90° gegenüber der Zahnspitze 23 verdreht, zwei Flügel 37 erkennbar sind, die insgesamt eine Verdrehsicherungskontur 38 bilden. Der Zahn 18 ist damit verdrehgesichert im Spanneinsatz 5 aufgenommen. Dies gilt sowohl für diejenigen zweiflügeligen Spannzähne 18, welche mit Spiel in Umfangsrichtung im Spanneinsatz 5 geführt sind, als auch für identisch geformte Spannzähne 18, welche spielfrei im Spanneinsatz 5 befestigt sind.

Zur axialen Sicherung des Spannzahnes 18 nach Figur 10 ist, vergleichbar mit der Anordnung nach Figur 4, ein Topsegment 17 vorgesehen, welches in Figur 11 erkennbar ist. Drei spielfrei fixierte Zähne 18 der in den Figuren 10 und 11 dargestellten Form sind in 120°-Abständen am Umfang des Spannfutters 1 verteilt. Im Übrigen sind ausschließlich spielbehaftete Spannzähne 18 am Umfang des Bauteils 13 verteilt.

Keilförmige, asymmetrischen gestufte Spannzähne 18 der in Figur 7 dargestellten Form sind ebenso wie im Wesentlichen walzenförmige Spannzähne 18 der in Figur 10 dargestellten Form, sofern Spiel in Umfangsrichtung des Spannfutters 1 gegeben ist, zum Einschwimmen in die Verzahnung 14 des Bauteils 13 prädestiniert. Dies gilt innerhalb von Grenzen, welche bei der Serienfertigung nicht überschritten werden sollten, sogar in Fällen, in denen das Bauteil 13 Teilungsfehler hat oder unrund ist, das heißt eine von der idealen Kreisform abweichende Form hat.

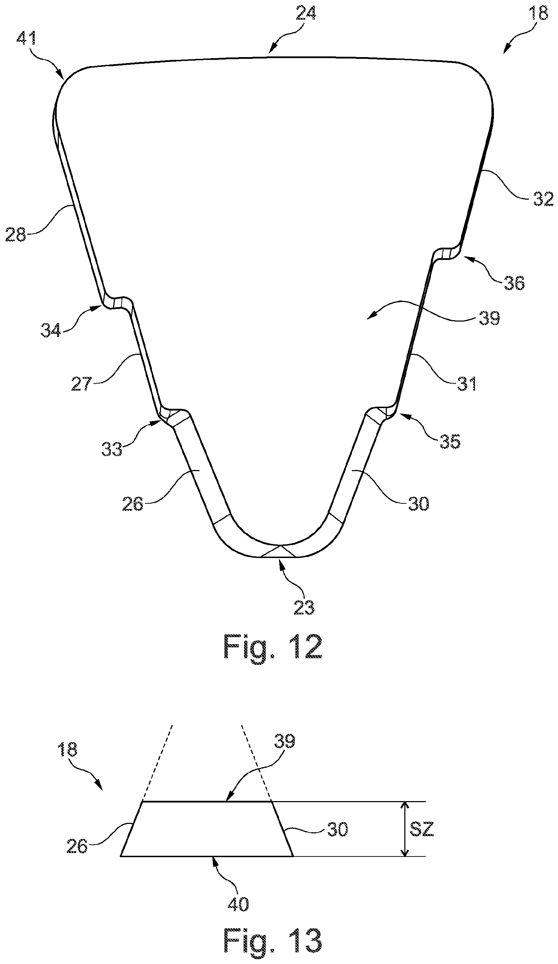

Die dreidimensionale Gestaltung des Spannzahns 18, welcher mit Spiel in Umfangsrichtung im Spanneinsatz 5 geführt ist, geht insbesondere aus den Figuren 12 und 13 hervor. Deutlich erkennbar ist, dass eine erste, mit 39 bezeichnete Stirnfläche des Spannzahns 18 kleiner als die gegenüberliegende, mit 40 bezeichnete Stirnfläche ist. Dies hat zur Folge, dass gedachte Ebenen, welche an die an die Zahnspitze 23 grenzenden Flankenabschnitte 26, 30 angelegt werden, wie in Figur 13 gestrichelt angedeutet, sich vor der Stirnfläche 39 schneiden. Die zwischen den Stirnflächen 39, 40 zu messende Stärke des Spannzahns 18 ist mit SZ bezeichnet.

Was den Spannkraft übertragenden Zahnrücken 24 betrifft, so weist dieser eine kreisbogenartig gekrümmte Form auf, welche zur Mittelachse des gesamten Spannfutters 1 konzentrisch ist. Der Spannzahn 18 ist damit prädestiniert für zumindest geringfügige Verschiebungen in Umfangsrichtung des Spannfutters 1. Die Übergänge zwischen dem Zahnboden 24 und den Flankenabschnitten 28, 32 sind, wie aus Figur 12 hervorgeht, als abgerundete Abschnitte 41 ausgebildet.

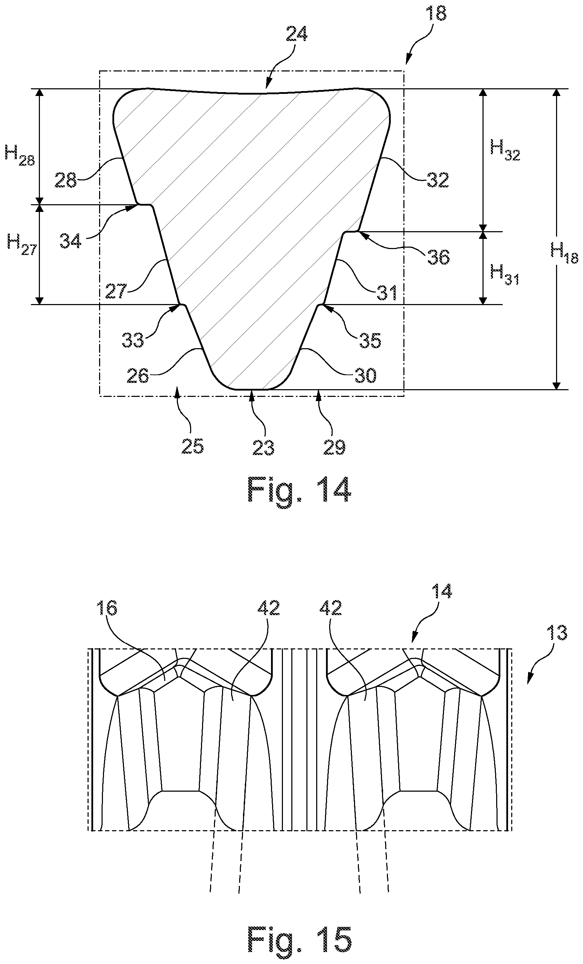

Die Figur 15 zeigt geometrische Merkmale des mit Hilfe der Spannzähne 18 nach Figur 7 zu spannenden Bauteils 13, nämlich eines Kupplungskörper einer Synchronisationsvorrichtung für ein Schaltgetriebe. Deutlich erkennbar ist die Pfeilform der Zähne 16 des Bauteils 13. Flanken der Zähne 16 sind mit 42 bezeichnet. Eine Schrägstellung der Zahnflanken 42 ist nicht nur, wie üblich, in dem Sinne gegeben, dass die Zahnflanken eines Zahnes 16 von der Mittelachse des Bauteils 13 nach außen dachförmig aufeinander zu laufen, sondern auch derart, dass in der Draufsicht, dass heißt mit Blickrichtung senkrecht auf die Mittelachse des Bauteils 13, wie in Figur 15 dargestellt, Ebenen, die an die Zahnflanken 42 benachbarter Zähne 16 gelegt sind, in Axialrichtung des Bauteils 13 aufeinander zu laufen. Dementsprechend ist, wie in Figur 15 durch gestrichelte Linien angedeutet ist, zwischen Geraden, die jeweils am Übergang zwischen Zahngrund und Zahnflanke 42 an die Zahnflanken 42 benachbarter Zähne 16 angelegt werden, ein spitzer Winkel eingeschlossen. In Figur 15 entspricht die Lage dieser beiden Geraden der Lage der beiden inneren gestrichelten Linien. Die beiden äußeren gestrichelten Linien, zwischen welchen ebenfalls ein spitzer Winkel eingeschlossen ist, markieren die Übergänge zwischen den Zahnflanken 42 und den Spitzen der Zähne 16 und verdeutlichen ebenfalls die Pfeilform der Zähne 16. An den Zähnen 16 liegen beim Spannen des Werkstücks 13 die Flankenabschnitte 26, 30 an.

Die Figur 14 zeigt eine im Vergleich zur Gestaltung nach Figur 7 abgewandelte Querschnittsform eines Spannzahns 18, wobei in diesem Fall das Spannen eines innenverzahnten Bauteils 13 vorgesehen ist. Der Zahnrücken 24 ist hierbei, wie aus Figur 14 hervorgeht, konkav geformt, um sich auf einer den entsprechenden Krümmungsradius aufweisenden, durch den Spanneinsatz 5 bereitgestellten Außenumfangsfläche abstützen zu können. Auch in diesem Fall ist ein Spiel des Spannzahns 18 in Umfangsrichtung des Spannfutters 1 gegeben.

### Bezugszeichenliste

- 1: Spannfutter
- 2: Spannbacken
- 3: Grundbacke
- 4: Haltesegment
- 5: Spanneinsatz
- 6: Basisbaugruppe
- 7: Schraube
- 8: Schraube
- 9: Mittelsegment
- 10: Unterlagesegment
- 11: Schraube
- 12: Eingriffskontur
- 13: Bauteil
- 14: Verzahnung
- 15: Einführhilfe
- 16: Zahn des Bauteils
- 17: Topsegment
- 18: Spannzahn
- 19: Ausnehmung
- 20: Stufe im Topsegment
- 21: Stufe im Mittelsegment
- 22: Bolzen
- 23: Zahnspitze
- 24: Zahnboden, Zahnrücken
- 25: Zahnflanke
- 26, 27, 28: Flankenabschnitt
- 29: Zahnflanke
- 30, 31, 32: Flankenabschnitt
- 33...36: Stufe
- 37: Flügel
- 38: Verdrehsicherungskontur
- 39: erste Stirnfläche des Spannzahns
- 40: zweite Stirnfläche des Spannzahns
- 41: abgerundeter Abschnitt
- 42: Zahnflanke eines Zahns des Bauteils

- H₂₇...H₃₂: Höhe
- SpU: Spiel in Umfangsrichtung
- SZ: Stärke des Spannzahns

## Patentansprüche

1. Spanneinsatz (5) für Spannbacken eines Spannfutters, der ein mehrteilig aufgebautes, an einem Spannbacken (2) zu befestigendes Haltesegment (4) aufweist, in welchem einzelne Spannzähne (18) gehalten sind, welche insgesamt eine korrespondierend zur Dimensionierung eines zu spannenden, verzahnten Bauteils (13) gekrümmte, verzahnte Eingriffskontur (12) beschreiben, **dadurch gekennzeichnet, dass** die Mehrzahl der Spannzähne (18) mit Spiel in Umfangsrichtung im Haltesegment (4) aufgenommen ist.

2. Spanneinsatz (5) nach Anspruch 1, **dadurch gekennzeichnet, dass** das Haltesegment (4) drei aufeinander liegende, fest miteinander verbundene Segmentstücke (9, 10, 17), nämlich ein zur Auflage auf einem Grundkörper (3) einer Spannbacke (2) vorgesehenes Unterlagesegment (10), ein auf diesem aufliegendes Mittelsegment (9), sowie ein das Mittelsegment (9) abdeckendes Topsegment (17), umfasst, wobei Ausnehmungen (19) zur Aufnahme jeweils eines Spannzahns (18) im Mittelsegment (9) ausgebildet sind, und wobei das Topsegment (17) des Haltesegments (4) eine der Anzahl der Spannzähne (18) entsprechende Anzahl an zahnförmigen Einführhilfen (15) aufweist.

3. Spanneinsatz (5) nach Anspruch 1 oder 2, **dadurch gekennzeichnet, dass** im Haltesegment (4) drei Spannzähne (18) gehalten sind, wobei zumindest die beiden äußeren Spannzähne (18) Spiel in Umfangsrichtung aufweisen.

4. Spanneinsatz (5) nach Anspruch 3, **dadurch gekennzeichnet, dass** die einzelnen Spannzähne (18) zum Eingriff in jede zweite Zahnlücke des zu spannenden Bauteils (13) vorgesehen sind.

5. Spanneinsatz (5) nach einem der Ansprüche 1 bis 4, **dadurch gekennzeichnet, dass** die Spannzähne (18) gestufte Zahnflanken (25, 29) aufweisen.

6. Spanneinsatz (5) nach Anspruch 5, **dadurch gekennzeichnet, dass** die Stufung einer ersten Zahnflanke (25) von der Stufung der zweiten Zahnflanke (29) desselben Spannzahns (18) abweicht.

7. Spanneinsatz (5) nach Anspruch 6, **dadurch gekennzeichnet, dass** die Zahnflanken (25, 29) jeweils drei in sich gerade Flankenabschnitte (26, 27, 28; 30, 31, 32) aufweisen, wobei zwei an die Zahnspitze (23) anschließende Flankenabschnitte (26, 30) gleich lang und derart schräg gestellt sind, dass sich zwei Ebenen, in welchen diese Flankenabschnitte (26, 30) liegen, vor einer Stirnseite (39) des Spannzahns (18) schneiden.

8. Spanneinsatz (5) nach Anspruch 7, **dadurch gekennzeichnet, dass** sich ein mittlerer Flankenabschnitt (27, 31) und ein an den Zahnboden (24) grenzender äußerer Flankenabschnitt (28, 32) zusammen über mehr als die Hälfte der in Radialrichtung zu messenden Zahnhöhe (H₁₈) erstrecken, wobei das Verhältnis zwischen der Höhe (H₂₈, H₃₂) des äußeren Flankenabschnitts (28, 32) und der Höhe (H₂₇, H₃₁) des mittleren Flankenabschnitts (27, 31) im Fall der ersten Zahnflanke (25) mindestens 7 : 10 und höchstens 13 : 10 und im Fall der zweiten Zahnflanke (29) mindestens 17 : 10 und höchstens 23 : 10 beträgt.

9. Spanneinsatz (5) nach einem der Ansprüche 5 bis 8, **dadurch gekennzeichnet, dass** der Spannzahn (18) einen gekrümmten Zahnboden (24) aufweist, welcher einen zur Mittelachse des Spannfutters konzentrischen Kreisbogen beschreibt.

10. Set an Spanneinsätzen (5) für ein Spannfutter (1), wobei eine erste, gemäß einem der Ansprüche 1 bis 9 ausgebildete Teilmenge an Spanneinsätzen (5) ausschließlich spielbehaftete, nämlich ein Spiel in Umfangsrichtung des Spannfutters (1) aufweisende Spannzähne (18) umfasst, wogegen eine zweite, aus drei Spanneinsätzen (5) gebildete Teilmenge genau einen spielfrei gehaltenen Spannzahn (18) pro Spanneinsatz (5) aufweist.

11. Set an Spanneinsätzen (5) nach Anspruch 10, **dadurch gekennzeichnet, dass** dieses aus sechs Spanneinsätzen (5) gebildet ist, welche jeweils drei Spannzähne (18) aufweisen, wobei jeweils der mittlere Spannzahn (18) eines jeden Spanneinsatzes (5), welche der zweiten Teilmenge zuzurechnen sind, spielfrei gehalten ist, wogegen die beiden übrigen Spannzähne (18) desselben Spanneinsatzes (5) mit Spiel in Umfangsrichtung geführt sind.

12. Set an Spanneinsätzen (5) nach Anspruch 10, **dadurch gekennzeichnet, dass** jeder Spanneinsatz (5) der zweiten Teilmenge lediglich einen einzigen Spannzahn (18) umfasst, wobei dieser mittels einer zweiflügeligen Verdrehsicherungskontur (38) spielfrei und verdrehgesichert im Haltesegment (4) fixiert ist.

13. Verfahren zum Spannen eines außenverzahnten Bauteils (13) an dessen Verzahnung (14), **dadurch gekennzeichnet, dass** mehrere Spanneinsätze (5), welche jeweils eine korrespondierend zur Dimensionierung des verzahnten Bauteils (13) gekrümmte, durch einzelne Spannzähne (18) gebildete Eingriffskontur (12) aufweisen, in Eingriff mit der Verzahnung (14) des zu spannenden Bauteils (13) gebracht werden, und wobei insgesamt genau drei der Spannzähne (18) spielfrei in einem Spanneinsatz (5) fixiert sind, während alle übrigen Spannzähne (18) mit Spiel in Umfangsrichtung des Bauteils (13) in den Spanneinsätzen (5) geführt werden.

14. Verfahren nach Anspruch 13, **dadurch gekennzeichnet, dass** das Bauteil (13) durch die Spanneinsätze (5) in sechs Umfangsabschnitten von insgesamt mehr als 210° gegriffen wird.

15. Verfahren nach Anspruch 13 oder 14, **dadurch gekennzeichnet, dass** durch die Spanneinsätze (5) ein Kupplungskörper (13) einer Synchronisationsvorrichtung für ein Schaltgetriebe gegriffen wird.

## Claims

1. A camping insert (5) for clamping jaws of a clamping chuck, which has a multi-part holding segment (4) to be fastened to a clamping jaw (2), in which individual clamping teeth (18) are held, which together describe a curved toothed engagement contour (12) corresponding with the dimensioning of a toothed component (13) to be clamped, **characterised in that** the majority of the plurality of teeth (18) is received in the holding segment (4) with play in the circumferential direction.

2. The clamping insert (5) according to claim 1, **characterised in that** the holding segment (4) comprises three segment pieces (9, 10, 17) which lie one on top of the other and are firmly connected to one another, namely a lower segment (10) provided for resting on a base body (3) of a clamping jaw (2), a middle segment (9) resting on the lower segment, and a top segment (17) covering the middle segment (9), wherein recesses (19) for receiving a respective clamping tooth (18) are formed in the middle segment (9), and wherein the top segment (17) of the holding segment (4) has a number of tooth-shaped insertion aids (15) corresponding to the number of clamping teeth (18).

3. The clamping insert (5) according to claim 1 or 2, **characterised in that** three clamping teeth (18) are held in the holding segment (4), wherein at least the two outer clamping teeth (18) have play in the circumferential direction.

4. The clamping insert (5) according to claim 3, **characterised in that** the individual clamping teeth (18) are provided for engaging in every second tooth gap of the component (13) to be clamped.

5. The clamping insert (5) according to any one of claims 1 to 4, **characterised in that** the clamping teeth (18) have stepped tooth flanks (25, 29).

6. The clamping insert (5) according to claim 5, **characterised in that** the step of a first tooth flank (25) differs from the step of the second tooth flank (29) of the same clamping tooth (18).

7. The clamping insert (5) according to claim 6, **characterised in that** the tooth flanks (25, 29) each have three straight flank sections (26, 27, 28; 30, 31, 32), wherein two flank sections (26, 30) adjoining the tooth tip (23) are of equal length and are inclined in such a way that two planes, in which these flank sections (26, 30) lie, intersect in front of an end face (39) of the clamping tooth (18).

8. The clamping insert (5) according to claim 7, **characterised in that** a middle flank section (27, 31) and an outer flank section (28, 32) adjoining the tooth base (24) extend together over more than half of the tooth height (H₁₈) to be measured in the radial direction, wherein the ratio between the height (H₂₈, H₃₂) of the outer flank section (28, 32) and the height (H₂₇, H₃₁) of the middle flank section (27, 31) in the case of the first tooth flank (25) is at least 7:10 and at most 13:10 and in the case of the second tooth flank (29) is at least 17:10 and at most 23:10.

9. The clamping insert (5) according to any one of claims 5 to 8, **characterised in that** the clamping tooth (18) has a curved tooth base (24) which describes an arc of a circle concentric with the central axis of the clamping chuck.

10. A set of clamping inserts (5) for a clamping chuck (1), wherein a first subset of clamping inserts (5) designed according to any one of claims 1 to 9 exclusively comprises clamping teeth (18) that are subject to play, namely play in the circumferential direction of the clamping chuck (1), whereas a second subset formed from three clamping inserts (5) has exactly one clamping tooth (18) held without play per clamping insert (5).

11. The set of clamping inserts (5) according to claim 10, **characterised in that** it is formed from six clamping inserts (5), each of which has three clamping teeth (18), wherein the middle clamping tooth (18) of each clamping insert (5), which are to be assigned to the second subset, is held free of play, whereas the two remaining clamping teeth (18) of the same clamping insert (5) are guided with play in the circumferential direction.

12. The set of clamping inserts (5) according to claim 10, **characterised in that** each clamping insert (5) of the second subset comprises only a single clamping tooth (18), wherein this is fixed free of play and secured against rotation in the holding segment (4) by means of a two-wing anti-rotation contour (38).

13. A method for clamping an externally toothed component (13) on its toothing (14), **characterised in that** a plurality of clamping inserts (5), which each have an engagement contour (12) formed by individual clamping teeth (18) and curved to correspond to the dimensioning of the toothed component (13), are brought into engagement with the toothing (14) of the component (13) to be clamped, and wherein a total of exactly three of the clamping teeth (18) are fixed without play in a clamping insert (5), while all the other clamping teeth (18) are guided with play in the circumferential direction of the component (13) in the clamping inserts (5).

14. The method according to claim 13, **characterised in that** the component (13) is gripped by the clamping inserts (5) in six circumferential sections totalling more than 210°.

15. The method according to claim 13 or 14, **characterised in that** a coupling body (13) of a synchronisation device for a manual transmission is gripped by the clamping inserts (5).

## Revendications

1. Insert de serrage (5) pour mâchoires de serrage d'un mandrin de serrage, lequel comporte un segment de maintien (4), réalisé en plusieurs parties, destiné à être fixé à une mâchoire de serrage (2), dans lequel sont logées des dents de serrage (18) individuelles, lesquelles décrivent collectivement un contour de prise (12) denté, incurvé de manière à correspondre aux dimensions d'un composant (13) denté à serrer, **caractérisé en ce que** la pluralité de dents de serrage (18) sont logées dans le segment de maintien (4) avec jeu dans la direction circonférentielle.

2. Insert de serrage (5) selon la revendication 1, **caractérisé en ce que** le segment de maintien (4) comporte trois pièces de segment (9, 10, 17) superposées les unes sur les autres et solidaires les unes des autres, à savoir un segment de support (10) pour l'appui sur un corps de base (3) d'une mâchoire de serrage (2), un segment médian (9) s'appuyant sur celui-ci, ainsi qu'un segment supérieur (17) recouvrant le segment médian (9), dans lequel des évidements (19) permettant le logement respectivement d'une dent de serrage (18) sont formés dans le segment médian (9), et dans lequel le segment supérieur (17) du segment de maintien (4) comporte un nombre d'introducteurs (15) en forme de dent correspondant au nombre de dents de serrage (18).

3. Insert de serrage (5) selon la revendication 1 ou 2, **caractérisé en ce que,** dans le segment de maintien (4), trois dents de serrage (18) sont maintenues, dans lequel les au moins deux dents de serrage (18) extérieures comportent un jeu dans la direction circonférentielle.

4. Insert de serrage (5) selon la revendication 3, **caractérisé en ce que** les dents de serrage (18) individuelles doivent venir en prise avec chaque entredent sur deux du composant (13) à serrer.

5. Insert de serrage (5) selon l'une quelconque des revendications 1 à 4, **caractérisé en ce que** les dents de serrage (18) comportent des flancs de dent (25, 29) étagés.

6. Insert de serrage (5) selon la revendication 5, **caractérisé en ce que** l'étagement d'un premier flanc de dent (25) diffère de l'étagement du second flanc de dent (29) de la même dent de serrage (18).

7. Insert de serrage (5) selon la revendication 6, **caractérisé en ce que** les flancs de dent (25, 29) comportent respectivement trois sections de flanc (26, 27, 28 ; 30, 31, 32) rectilignes, dans lequel deux sections de flanc (26, 30) aboutissant à la pointe de dent (23) sont de même longueur et inclinés de telle sorte que deux plans, dans lesquels se trouvent lesdites sections de flanc (26, 30), se coupent devant une face frontale (39) de la dent de serrage (18).

8. Insert de serrage (5) selon la revendication 7, **caractérisé en ce qu'**une section de flanc médiane (27, 31) et une section de flanc extérieure (28, 32) délimitant le fond de dent (24) s'étendent ensemble sur plus de la moitié de la hauteur de dent (H₁₈) à mesurer dans la direction radiale, le rapport entre la hauteur (H₂₈, H₃₂) de la section de flanc extérieure (28, 32) et la hauteur (H₂₇, H₃₁) de la section de flanc médiane (27, 31), dans le cas du premier flanc de dent (25), étant d'au moins 7:10 et d'au plus 13:10 et, dans le cas du second flanc de dent (29), est d'au moins 17:10 et d'au plus 23:10.

9. Insert de serrage (5) selon l'une quelconque des revendications 5 à 8, **caractérisé en ce que** la dent de serrage (18) comporte un fond de dent (24) incurvé, lequel décrit un arc de cercle concentrique par rapport à l'axe médian du mandrin de serrage.

10. Ensemble d'inserts de serrage (5) pour un mandrin (1), dans lequel un premier sous-ensemble d'inserts de serrage (5), conçus selon l'une quelconque des revendications 1 à 9, comprend exclusivement des dents de serrage (18) avec jeu, à savoir un j eu dans la direction circonférentielle du mandrin (1), pendant qu'un second sous-ensemble, formé de trois inserts de serrage (5), comporte précisément une dent de serrage (18) maintenue sans jeu par insert de serrage (5).

11. Ensemble d'inserts de serrage (5) selon la revendication 10, **caractérisé en ce qu'il** est formé de six inserts de serrage (5), lesquels comportent respectivement trois dents de serrage (18), chaque dent de serrage médiane (18) de chaque insert de serrage (5), lequel est à assigner au second sous-ensemble, étant maintenue sans jeu, pendant que les deux dents de serrage (18) restantes d'un même insert de serrage (5) sont guidées avec jeu dans la direction circonférentielle.

12. Ensemble d'inserts de serrage (5) selon la revendication 10, **caractérisé en ce que** chaque insert de serrage (5) du second sous-ensemble ne comprend qu'une seule dent de serrage (18), celle-ci étant fixée sans jeu et de manière à être bloquée en rotation dans le segment de maintien (4) au moyen d'un contour antirotation (38) à deux ailes.

13. Procédé de serrage d'un composant (13) denté extérieurement sur sa denture (14), **caractérisé en ce que** plusieurs inserts de serrage (5), chacun présentant un contour de prise (12) formé par les dents de serrage individuelles et incurvé de manière à correspondre aux dimensions d'un composant (13) denté, sont amenés en prise avec la denture (14) du composant (13) à serrer, un total de précisément trois des dents de serrage (18) étant fixées sans jeu dans un insert de serrage (5), pendant que toutes les dents de serrage (18) restantes sont guidées avec jeu dans la direction circonférentielle du composant (13) dans les inserts de serrage (5).

14. Procédé selon la revendication 13, **caractérisé en ce que** le composant (13) est amené en prise par les inserts de serrage (5) en six sections circonférentielles totalisant plus de 210°.

15. Procédé selon la revendication 13 ou 14, **caractérisé en ce qu'**un corps d'accouplement (13) d'un dispositif de synchronisation pour une boîte de vitesses est amené en prise par les inserts de serrage.
